# EUROPEAN PATENT APPLICATION

(11) **EP 1 701 106 A2**
(43) Date of publication of application: **13.09.2006**
(21) Application number: 05010212.8
(22) Date of filing: 11.05.2005
(51) Int. Cl.: F24F 12/00

(54) **Ventilating system**

(30) Priority: 15.02.2005 KR 2005012306
(71) Applicant: LG ELECTRONICS INC., Seoul (KR)
(72) Inventor: Lee, Gi Seop 107-1906, Byucksan Blooming Apt., Seoul (KR); Kim, Kyung Hwan 103-1901, Moraksan Hyundai Apt., Uiwang-si Gyeonggi-do (KR); Choi, Ho Seon, Seoul (KR)
(74) Representative: Urner, Peter

(57) **Abstract**

Ventilating system including a case in communication with a room and an outside of the room, an air supply fan unit secured to the case, the air supply fan unit having a plurality of fans for introducing outdoor air into the room, an air discharge fan unit secured to the case, the air discharge fan unit having a plurality of fans for discharging room air to an outside of the room, and a preheat exchanger in the case opposite to the air supply fan unit and the air discharge fan unit, for making the outdoor air and the room air to heat exchange with each other, thereby providing a compact ventilating system.

## Description

### BACKGROUND OF THE INVENTION

### Field of the Invention

The present invention relates to ventilating systems, and more particularly, to a ventilating system having a preheat exchanger for making heat of room air being discharged to an outside of room and heat of outdoor air being supplied to the room to heat exchange.

### Discussion of the Related Art

Air in a closed room is polluted as time goes-by due to respiration of people making activity in the room, and so on. Therefore, it is required to replace the polluted room air with outdoor fresh air from time to time, for which the ventilating system is used. A general ventilating system is installed in a ceiling of a room. Therefore, for installation of the ventilating system, it is required to secure an adequate space between the ceiling of the room and an underside of an upper flat, for installation of the ventilating system. Consequently, a distance between a floor of a lower flat and a floor of an upper flat, i.e., a height between flats, can not but become high, which impair a spatial efficiency of the building, and drops economy of the building. Therefore, in order to solve above problem, it is required to design the ventilating system compact as far as possible.

Recently, in order to enhance thermal efficiency, the ventilating system employs a preheat exchanger for making room air being discharged to an outside of room and outdoor air being supplied to the room to heat exchange. However, the preheat exchanger can not but cause a size of a case of the ventilating system to become larger. Therefore, it is also required that the ventilating system is designed small even if the preheat exchanger is employed.

In the meantime, the ventilating system has a duct connected thereto for making the ventilating system in communication with the room and an outside of the room. The duct is mostly circular, but rectangular duct may be used if installation space is not enough. However, the rectangular duct has a higher pressure resistance than the circular duct. Therefore, it is required to design a ventilating system that enables air to flow smoothly even if the rectangular duct is used.

### SUMMARY OF THE INVENTION

Accordingly, the present invention is directed to a ventilating system that substantially obviates one or more problems due to limitations and disadvantages of the

### related art.

An object of the present invention is to provide a ventilating system which has a small size even if a preheat exchanger is provided thereto, and can make air to flow smoothly even if an inside pressure resistance of a duct connected to the ventilating system is high.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a ventilating system includes a case in communication with a room and an outside of the room, an air supply fan unit secured to the case, the air supply fan unit having a plurality of fans for introducing outdoor air into the room, an air discharge fan unit secured to the case, the air discharge fan unit having a plurality of fans for discharging room air to an outside of the room, and a preheat exchanger in the case opposite to the air supply fan unit and the air discharge fan unit, for making the outdoor air and the room air to heat exchange with each other.

The air supply fan unit and the air discharge fan unit each draws air in an axial direction and discharges the air in a radial direction. The plurality of fans of the air supply fan unit and the plurality of fans of the air discharge fan unit have the same number of fans.

The ventilating system further includes a partition plate between the preheat exchanger, the air supply fan unit, and the air discharge fan unit, for preventing the room air and the outdoor air passed through the preheat exchanger form mixing with each other. The partition plate includes a middle plate between the air supply fan unit and the air discharge fan unit, an upper plate extended from an upper portion of the middle plate to an inner space of the case and the preheat exchanger, for guiding air passed through the preheat exchanger to one of the air supply fan unit and the air discharge fan unit, and a lower plate extended from a lower portion of the middle plate to an inner space of the case and the preheat exchanger, for guiding air passed through the preheat exchanger to the other one of the air supply fan unit and the air discharge fan unit.

The air supply fan unit includes a scroll casing in the case, a first fan in the scroll casing for drawing and discharging the outdoor air passed through the preheat exchanger, and a second fan in the scroll casing for drawing and discharging the outdoor air discharged from the first fan. Both the first fan and the second fan may have the same motor coupled thereto. The first fan and the second fan may be connected to a rotation shaft of the motor in succession.

The ventilating system may further include a flow guide between the first fan and the second fan in the scroll casing, for guiding the outdoor air from the first fan to a suction side of the second fan. The flow guide may include a sloped surface extended from an air discharge portion of the first fan to an air suction portion of the second fan. The flow guide may have a curved surface extended from the air discharge portion of the first fan to an air suction portion of the second fan.

The air discharge fan unit may include a scroll casing in the case, a third fan in the scroll casing for drawing and discharging the room air passed through the preheat exchanger, and a fourth fan in the scroll casing for drawing and discharging the room air discharged from the third fan. Both the third fan and the fourth fan may have the same motor coupled thereto. The third fan and the fourth fan may be connected to a rotation shaft of the motor in succession.

The ventilating system may further include a flow guide between the third fan and the fourth fan in the scroll casing, for guiding the room air from the third fan to a suction side of the fourth fan. The flow guide may include a sloped surface extended from an air discharge portion of the third fan to an air suction portion of the fourth fan. The flow guide may have a curved surface extended from the air discharge portion of the third fan to an air suction portion of the fourth fan.

The ventilating system may further include filters in the case between the preheat exchanger and the outside of the room for filtering the outdoor air.

In the meantime, in another aspect of the present invention, a ventilating system includes a case having a first inlet for drawing room air, a first outlet for discharging room air, a second inlet for drawing outdoor air, and a second outlet for discharging outdoor air, an air supply fan unit having a scroll casing in the case, a first fan in the scroll casing for drawing and discharging the outdoor air, and a second fan in the scroll casing for drawing and discharging the outdoor air discharged from the first fan, an air discharge fan unit having a scroll casing in the case, a third fan in the scroll casing for drawing and discharging the room air, and a fourth fan in the scroll casing for drawing and discharging the room air discharged from the third fan, and a preheat exchanger in the case opposite to the air supply fan unit and the air discharge fan unit, for making the outdoor air and the room air to heat exchange with each other.

The ventilating system may further include a flow guide between the first fan and the second fan in the scroll casing, for guiding the outdoor air from the first fan to a suction side of the second fan.

The ventilating system may further include a flow guide between the third fan and the fourth fan in the scroll casing, for guiding the room air from the third fan to a suction side of the fourth fan.

In the meantime, in another aspect of the present invention, a ventilating system includes a case having a first inlet for drawing room air, a first outlet for discharging room air, a second inlet for drawing outdoor air, and a second outlet for discharging outdoor air, an air supply fan unit having a scroll casing in the case, a first fan in the scroll casing for drawing and discharging the outdoor air, and a second fan in the scroll casing for drawing and discharging the outdoor air discharged from the first fan, an air discharge fan unit having a scroll casing in the case, a third fan in the scroll casing for drawing and discharging the room air, and a fourth fan in the scroll casing for drawing and discharging the room air discharged from the third fan, a preheat exchanger in the case opposite to the air supply fan unit and the air discharge fan unit, for making the outdoor air and the room air to heat exchange with each other, and flow guides each provided between the first fan and the second fan, and between the third fan and the fourth fan.

In the meantime, in further aspect of the present invention, a ventilating system includes a case having a first inlet for drawing room air, a first outlet for discharging room air, a second inlet for drawing outdoor air, and a second outlet for discharging outdoor air, a first inlet duct between the first inlet and the room, a first outlet duct between the first outlet and the outside of the room, a second inlet duct between the second inlet and the outside of the room, a second outlet duct between the second outlet and the room, an air supply fan unit having a scroll casing in the case, a first fan in the scroll casing for drawing and discharging the outdoor air, and a second fan in the scroll casing for drawing and discharging the outdoor air discharged from the first fan, an air discharge fan unit having a scroll casing in the case, a third fan in the scroll casing for drawing and discharging the room air, and a fourth fan in the scroll casing for drawing and discharging the room air discharged from the third fan, a preheat exchanger in the case opposite to the air supply fan unit and the air discharge fan unit, for making the outdoor air and the room air to heat exchange with each other, and flow guides each provided between the first fan and the second fan, and between the third fan and the fourth fan.

The first inlet duct, the first outlet duct, the second inlet duct, and the second outlet duct each has a rectangular section.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a perspective view of a ventilating system in accordance with a preferred embodiment of the present invention;

FIG. 2 illustrates a partial perspective view of the preheat exchanger of the ventilating system in FIG. 1;

FIG. 3 illustrates a partial perspective view of the air supply fan unit of the ventilating system in FIG. 1;

FIG. 4 illustrates a partial perspective view of the partition plate of the ventilating system in FIG. 1;

FIGS. 5 and 6 illustrate diagrams each showing an air flow when the ventilating system in FIG. 1 ventilates a room;

FIG. 7 illustrates a diagram showing an air flow on a side of the air supply fan unit when the ventilating system in FIG. 1 introduces outdoor air into a room; and

FIG. 8 illustrates a diagram showing an air flow on a side of the air discharge fan unit when the ventilating system in FIG. 1 discharges room air to an outside of a room.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

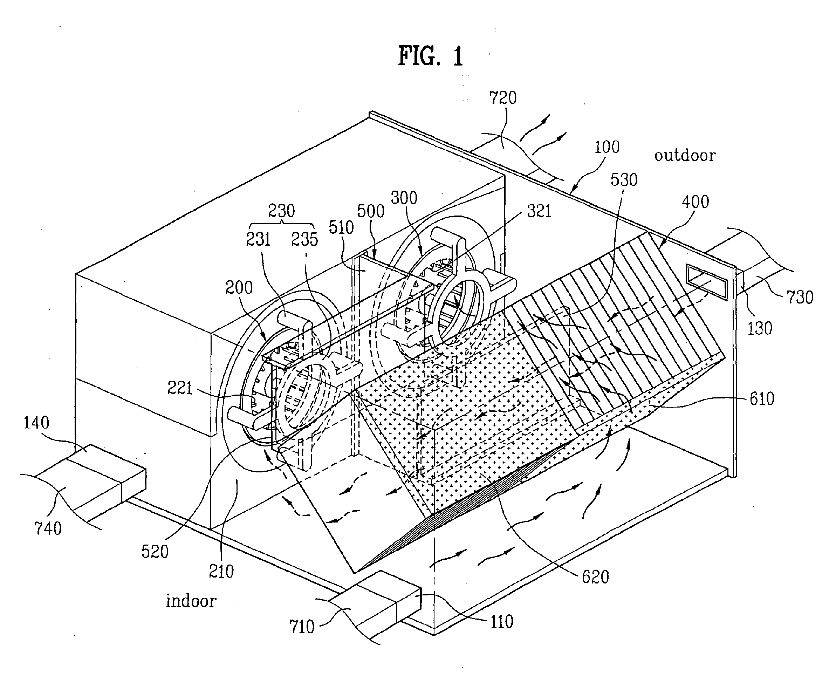

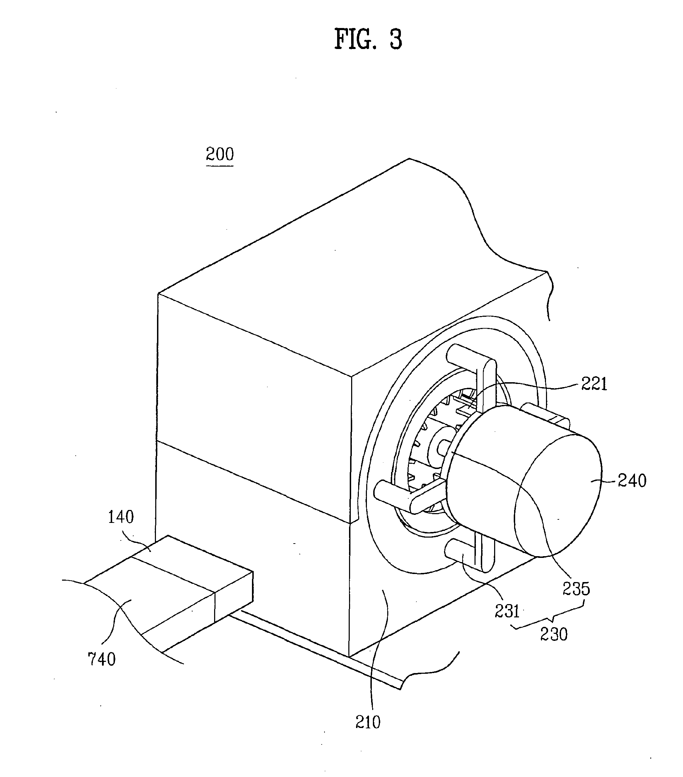

FIG. 1 illustrates a perspective view of a ventilating system in accordance with a preferred embodiment of the present invention. For showing an air supply fan unit 200 and an air discharge fan unit 300 more clearly, motors 240 (see FIG. 3) thereof are omitted. As shown in FIG. 1, the ventilating system of the present invention includes a case 100, a preheat exchanger 400, an air supply fan 200, and an air discharge fan 300.

The case 100 has an inside space and a plurality of ports connected to a plurality of ducts 710, 720, 730, and 740 in communication with a room or an outside of the room. In more detail, the ports are a first inlet 110 for drawing room air, a first outlet 120 for discharging room air from the case 100, a second inlet 130 for drawing outdoor air into the case 100, and a second outlet 140 for discharging outdoor air from the case 100.

For an example, as shown in FIG. 1, the first inlet 110 and the second outlet 140 are provided at opposite lower corners of one side of the case 100 respectively, and the second inlet 130 and the first outlet 120 are provided to, for an example, opposite upper corners of the other side opposite to the one side of the case 100, respectively. The first inlet 110 and the first outlet 120 are positioned diagonally to each other, and the second inlet 130 and the second outlet 140 are positioned diagonally to each other.

The first inlet 110 and the second outlet 140 are respectively connected to the first inlet duct 710 and the first outlet duct 740 in communication with the room, and the second inlet 130 and the first outlet 120 are respectively connected to the second inlet duct 730 and the first outlet duct 720 in communication with the outside of the room. The ducts 710, 720, 730, and 740 have rectangular sections for minimizing a height of a space the ducts 710, 720, 730, and 740 are installed therein. As shown in solid line arrows in FIG. 1, the room air is introduced into the case 100 through the first inlet duct 710 and the first inlet 110, and discharged to an outside of the room through the first outlet 120 and the first outlet duct 720, and, as shown in dashed line arrows, the outdoor air is introduced into the case 100 through the second inlet duct 730 and the second inlet 130, and supplied to the room through the second outlet 140 and the second outlet duct 740.

Referring to FIG. 1, the room air and the outdoor air introduced into the case 100 pass through the preheat exchanger 400, respectively. The preheat exchanger 400 is mounted close to the first inlet 110 and the second inlet 130 in the case 100.

Referring to FIG. 1, the preheat exchanger 400 has an elongated hexahedron shape, and is mounted such that one end thereof is in contact with one side of the case 100 having the first inlet 110 provided thereto, and the other end thereof is in contact with the other side of the case 100 having the second inlet 130 provided thereto. As shown in FIG. 1, three of four longitudinal edges of the preheat exchanger 400 are respectively in close contact with an upper surface, a lower surface, and a side surface both the first inlet 110 and the second inlet 130 are adjacent thereto.

According to this, the first inlet 110 and the second inlet 130 are separated from each other, the first inlet 110 is separated from the second outlet 140, and the second inlet 130 is separated from the first inlet 120. Therefore, room air introduced into the case 100 through the first inlet 110 can reach to the first outlet 120 only through the preheat exchanger 400, and the outdoor air introduced into the case 100 through the second inlet 130 can reach to the second outlet 140 only through the preheat exchanger 400. The room air and the outdoor air introduced into the case 100 respectively move along passages separated from each other by the preheat exchanger 400.

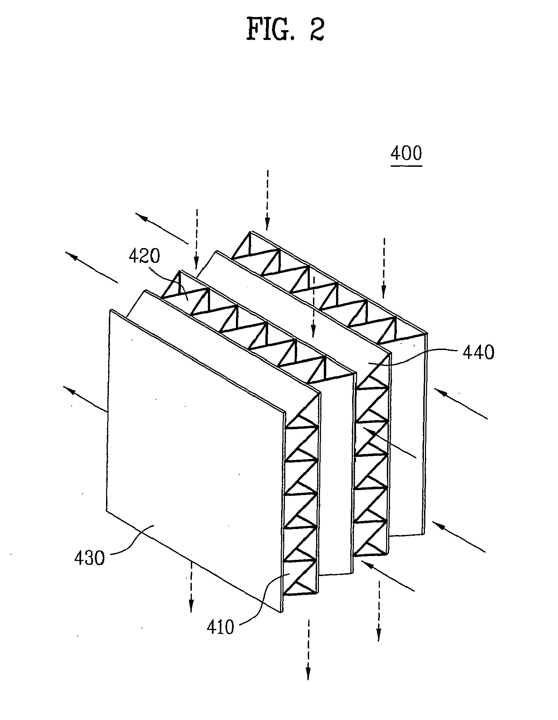

In the meantime, the preheat exchanger 400 makes the room air and the outdoor air to cross and heat exchange with each other, indirectly. In more detail, as shown in FIG. 2, the preheat exchanger has a plurality of first flow passages 410 spaced from one another at predetermined distances for flow of the room air, and a plurality of second flow passages 420 between the first flow passages 410 for flow of the outdoor air.

Between the first flow passages 410 and the second flow passages 420, there are plates 430 for making the room air and the outdoor air to heat exchange. The plates 430 are arranged perpendicular to flow directions of the room air and the outdoor air being introduced into the case 100 through the first inlet 110 and the second inlet 130. According to this, the first flow passages 410 and the second flow passages 420 are also arranged perpendicular to the flow directions of the room air and the outdoor air being introduced into the case 100.

In each of the first flow passages 410 and the second flow passages 420, there is a guide 440 for guiding flow of the room air or the outdoor air, and providing a larger heat exchange area. As shown in FIG. 2, the guide 440 has, for an example, a plurality of continuous folds, each having a peak point and a bottom point in contact with an upper surface and a lower surface of each plate 430.

Referring to FIG. 1, the air supply fan unit 200 and the air discharge fan unit 300 are secured to the case 100 respectively, for drawing outdoor air or room air passed through the preheat exchanger 400 and supplying to the room or discharging to an outside of the room. It is preferable that the air supply fan unit 200 is arranged between the preheat exchanger 400 and the room, and the air discharge fan unit 300 is arranged between the preheat exchanger 400 and the outside of the room.

This is for forming a low pressure on an outlet side of the preheat exchanger 400, for improving an air flow performance. Then, air can pass through the preheat exchanger 400 easily by a pressure difference between the outlet side and an inlet side of the preheat exchanger, before the air is drawn into the air supply fan unit 200 and the air discharge fan unit 300. According to this, not only the flow performance of the air improved, but also flow noise of the air can be minimized.

However, opposite to this, if the air supply fan unit 200 and the air discharge fan unit 300 are arranged on the inlet side of the preheat exchanger 400, the preheat exchanger 400 on the outlet side of the air supply fan unit 200 and the air discharge fan unit 300 act as a high resistance. According to this, a back pressure of the air supply fan 200 and the air discharge fan 300 becomes high, not only to drop a discharge performance of the air supply fan unit 200 and the air discharge fan unit 300, but also to increase flow noise of the air.

The air supply fan unit 200 and the air discharge fan unit 300 are arranged adjacent to each other opposite to the preheat exchanger 400. Moreover, for an example, as shown in FIG. 1, the air supply fan unit 200 and the air discharge fan unit 300 are arranged parallel to the preheat exchanger. The air supply fan 200 and the air discharge fan have substantially identical structures. Accordingly, hereafter, the structure of the air supply fan unit 200 will be described with reference to FIG. 3, and description of the structure of the air discharge fan unit 300 will be omitted.

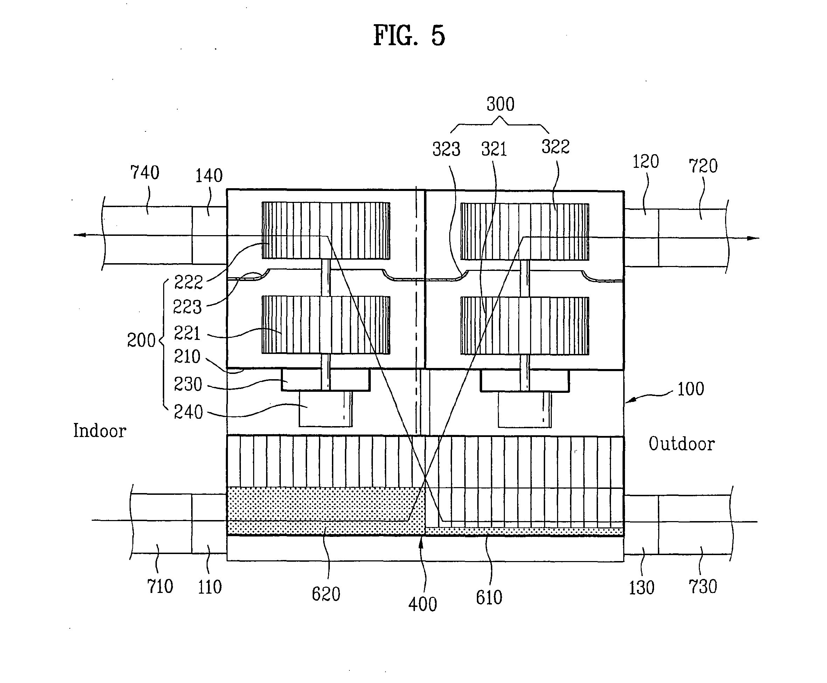

The air supply fan 200 includes a scroll casing 210 secured to an inside surface of the case 100, a first fan 221 in the scroll casing 210, and a second fan 222 (see FIG. 5) in the scroll casing 210. The scroll casing 210 has an inlet (not shown) in communication with an inside of the case 100, and an outlet in communication with the second outlet 140. The first fan 221 is arranged inside of the scroll casing 210, and the inlet of the scroll casing 210 is positioned on a rear side of the first fan 221 in an axial direction thereof. The second fan 222 is positioned on a front side of the first fan 221 in an axial direction thereof inside of the scroll casing 210, and the outlet of the scroll casing 210 is in a radial direction of the second fan 222. Accordingly, when the first fan 221 and the second fan 222 rotate, the outdoor air passed through the preheat exchanger 400 is drawn in the axial direction of the first fan 221, and discharged in the radial direction of the first fan 221, and the outdoor air discharged in the radial direction of the first fan 221 is drawn in the axial direction of the second fan 222, and discharged in the radial direction of the second fan 222.

The motor 240 for driving the first fan 221 and the second fan 222 is provided in the case 100, in more detail, between the first fan 221 and the preheat exchanger 400. The first fan 221 and the second fan 222 are connected to a rotation shaft of the motor 240 in succession, and rotate at the same time. There is a motor mount 230 provided additionally for supporting the first fan 221 spaced a predetermined distance away from the motor 240. The motor mount 230 is secured to the case 100 or the scroll casing 210, and includes a plurality of legs 231 extended to an inside of the case 100, and a circular rim 235 connecting ends of the legs 231 and supporting the motor 240. In the meantime, the rotation shaft of the motor 240 secured to the rim 235 is passed through the inlet of the scroll casing 210, and secured to a hub of the first fan 221 and a hub of the second fan 222 in succession at the same time. Between the first fan 221 and the second fan 222, there is a flow guide 223 provided additionally for guiding the outdoor air discharged from the first fan 221 to the axial direction of the second fan 222. The flow guide 223 has a curved surface extended from an air discharge portion of the first fan 221 to an air suction portion of the second fan 222. Though not shown, the flow guide 223 may have a sloped surface extended from the air discharge portion of the first fan 221 to the air suction portion of the second fan 222.

As described, the motor 240 is spaced from the first fan 221, adequately. Therefore, when passing through the first fan 221 and the second fan 222, the air passed through the preheat exchanger 400 can be drawn into the scroll casing 210 through a space between the first fan 221 and the motor 240. Moreover, the first fan 221 and the preheat exchanger 400 are spaced adequately with the motor 240 inbetween. Therefore, an adequate low pressure can be formed in the space between the first fan 221 and the preheat exchanger 400 by the first fan 221, and owing to this, the air supply fan unit 200 can provide an adequate air discharge performance. Furthermore, air flow noise can be minimized. However, if the first fan 221 and the preheat exchanger 400 are arranged very closely, the air suction, and discharge performances of the first fan 221 will drop significantly, and the air flow noise will also increase. The outdoor air discharged in the radial direction of the first fan 221 is guided by the flow guide 223, and drawn in the axial direction of the second fan 222, and the outdoor air discharged in the radial direction of the second fan 222 is supplied to the room through the second outlet 140 and the second outlet duct 740.

As described before, the air discharge fan unit 300 has the same structure with the air supply fan unit 200 described before, substantially. That is, the first fan 221 of the air supply fan unit 200 can be substituted with a third fan 321, and the second fan 222 of the air supply fan 200 can be substituted with a fourth fan 322. Particularly, while the outlet of the air supply fan unit 200 is in communication with the second outlet 140, the air discharge fan unit 300 is in communication with the first outlet 120. Identical to the flow guide 223 of the air supply fan unit 200, the air discharge fan unit 300 has a flow guide 323 between the third fan 321 and the fourth fan 322 for guiding the outdoor air discharged from the third fan 321 to the axial direction of the fourth fan 322.

In the meantime, in the case 100, there are filters for filtering room air and outdoor air introduced into the case 100. The filters are a first filter 610 for filtering room air being discharged to an outside of the room, and a second filter 620 for filtering outdoor air being supplied to the room. It is preferable that the first filter 610 is on the inlet side of the preheat exchanger 400, i.e., between the first flow passage 410 of the preheat exchanger 400 and the room, and the second filter 620 is provided to the inlet side of the preheat exchanger 400, i.e., between the second flow passage 420 of the preheat exchanger 400 and the outside of the room. Then, flow performances of the outdoor air and the room air at the preheat exchanger 400 will be adequate, and infiltration of foreign matters into the preheat exchanger 400 can be prevented, to protect the preheat exchanger 400.

Opposite to this, if the first filter 610 and the second filter 620 are provided to the outlet side of the preheat exchanger 400, the first filter 610 and the second filter 620 will act as a high resistance that impedes flow of the room air and the outdoor air, causing failure of smooth flow of the outdoor air and room air in the preheat exchanger 400. Moreover, accumulation of much foreign matter in the preheat exchanger 400 causes a problem in that frequent cleaning, or replacement of the preheat exchanger 400 is required.

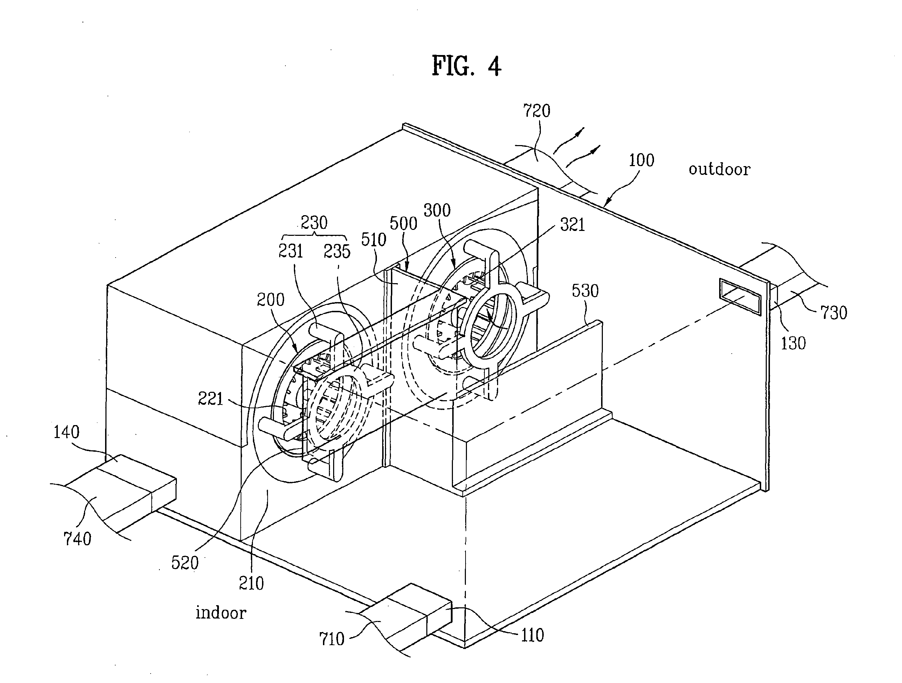

In the meantime, in order to prevent the outdoor air and the indoor air discharged from the preheat exchanger 400 from mixing with each other, a partition plate 500 is provided between the preheat exchanger 400, the air supply fan unit 200 and the air discharger fan unit 300. As shown in FIGS. 1 and 4, the partition plate 500 includes a middle plate 510, an upper plate 520, and a lower plate 530.

The middle plate 510 is between the air supply fan unit 200 and the air discharge fan unit 300. For an example, the middle plate 510 is extended from an inside surface of the case 100 to an edge of the preheat exchanger 400, to separate the air supply fan unit 200 from the air discharge fan unit 300.

Referring to FIG. 4, the upper plate 520 is extended from an upper portion of the middle plate 510 to an inside surface of the case 100 adjacent to the air supply fan unit 200 perpendicular to the middle plate 510. That is, as shown in FIG. 1, an upper side of the upper plate 520 is connected to an upper surface of the case 100, and opposite sides of the upper plate 520 are connected to the middle plate 510 and one side surface of the case 100 adjacent to the air supply fan unit 200 respectively, and a lower side of the upper plate 520 is connected to a portion of a longitudinal edge of the preheat exchanger 400.

Referring to FIG. 4, the lower plate 530 is extended from a lower portion of the middle plate 510 to an inside surface of the case 100 adjacent to the air discharge fan unit 300 perpendicular to the middle plate 510 in a direction opposite to the upper plate 520. That is, as shown in FIG. 1, a lower side of the lower plate 530 is connected to a bottom surface of the case 100, opposite sides of the lower plate 530 are connected to the middle plate 510 and the other side of the case 100 adjacent to the air discharge fan unit 300 respectively, and an upper side of the lower plate 530 is connected to a longitudinal edge of the preheat exchanger 400.

The partition plate 500 of above structure separates, not only the air supply fan unit 200 from the air discharge fan unit 300, but also the first outlet 120 from the second outlet 140. According to this, the room air passed through the first flow passage 410 of the preheat exchanger 400 and the outdoor air passed through the second flow passage 420 of the preheat exchanger 400 can be drawn toward the air discharge fan unit 300 and the air supply fan unit 200 respectively guided by the partition plate 500 without being mixed with each other.

However, structures for preventing the room air and the outdoor air passed through the preheat exchanger 400 from mixing with each other are not limited to above. For an example, the preheat exchanger 400 may be mounted such that the longitudinal edge of the preheat exchanger 400 connected to the lower side of the upper plate 520 and the upper side of the lower plate 530 may be in close contact with an inside surface of the case 100 where the air supply fan unit 200 and the air discharge fan unit 300 mounted thereto. In this case, the air supply fan unit 200 is mounted on a lower side of the longitudinal edge of the preheat exchanger 400 connected to the lower side of the upper plate 520 and the upper side of the lower plate 530, and the air discharge fan unit 300 is mounted on an upper side of the longitudinal edge of the preheat exchanger 400. Accordingly, the outdoor air and the room air discharged from the preheat exchanger 400 are not mixed with each other, but can be discharged to the room and the outside of the room from the case 100, respectively.

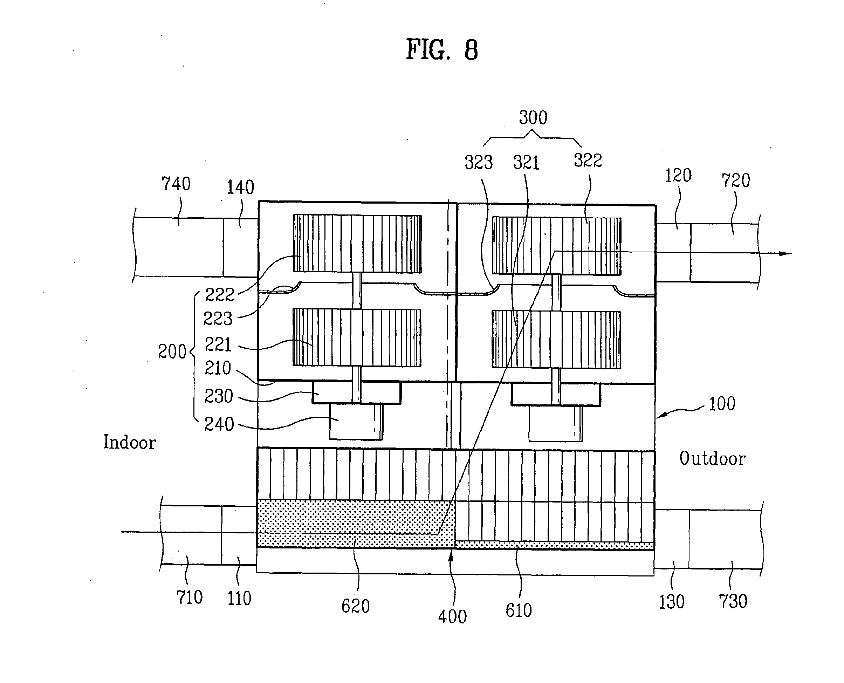

The ventilating system of the present invention of the foregoing structure is operated in three operation modes, i.e., a ventilating mode, an air supplying mode, and an air discharging mode. Above operation modes will be described with reference to FIGS. 5 and 8.

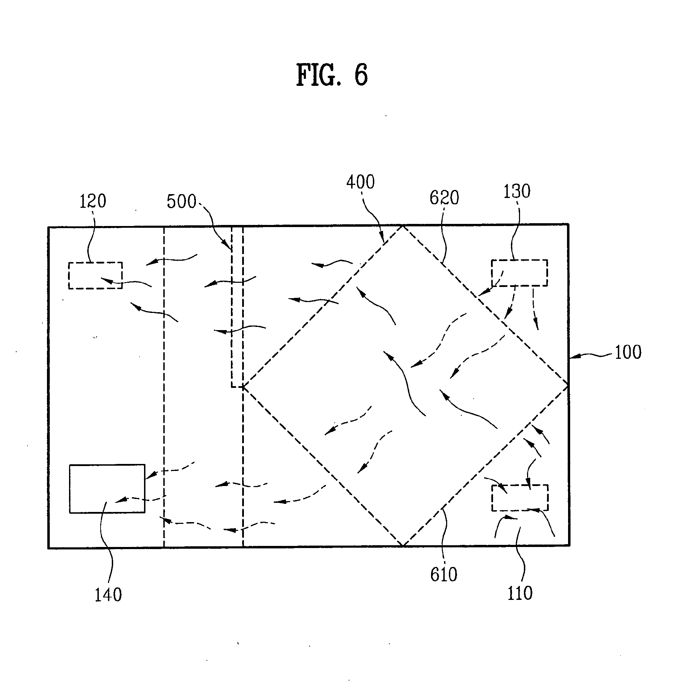

FIGS. 5 and 6 illustrate diagrams each showing an air flow when the ventilating system in FIG. 1 is operated in a ventilating mode. In the ventilating mode, polluted room air is discharged to an outside of the room, and fresh outdoor air is supplied to the room. In such a ventilating mode, both the air supply fan unit 200 and the air discharge fan unit 300 are operated. Then, adequate low pressures can be formed between the air supply fan unit 200 and the second flow passage 420 of the preheat exchanger 400, and between the air discharge fan unit 300 and the first flow passage 410 of the preheat exchanger 400. According to this, the outdoor air and the room air can be introduced into the case 100 through the second inlet 130 and the first inlet 110, respectively.

The room air, introduced into the case 100 through the first inlet 110, passes through the first filter 610, and flows into the first flow passages 410 of the preheat exchanger 400 formed perpendicular to the flow direction of the air being introduced into the case 100. The room air, passed through the first flow passages 410 of the preheat exchanger 400, is introduced into the air discharge fan unit 300 following the air flow direction in the preheat exchanger 400. The room air introduced into the air discharge fan unit 300 is involved in an increased discharge pressure as the room air passes through the third fan 321 and the fourth fan 322, and discharged to an outside of the room through the first outlet 120 and the first outlet duct 720.

The outdoor air, introduced into the case 100 through the second inlet 130, passes through the second filter 620, and is introduced into the second flow passages 420 of the preheat exchanger 400 formed perpendicular to an air flow direction of the air being introduced into the case 100. The outdoor air passed through the second flow passages 420 makes heat exchange with the room air that passes through the first flow passages 410.

Accordingly, by transferring thermal energy of the room air being discharged to an outside of the room to the outdoor air being drawn into the room, a certain amount of energy can be recovered. According to this, the outdoor air is introduced in a slightly cooled down state into the room in summer, and the outdoor air is introduced in a slightly heated state into the room in winter.

The outdoor air passed through the preheat exchanger 400 enters the air supply fan unit 200 in a direction the outdoor air flows in the preheat exchanger 400. Then, the outdoor air entered into the air supply fan unit 20 is discharged to an outside of the room through the second outlet 140 and the second outlet duct 740 in a state a discharge pressure of the outdoor air is increased as the outdoor air passes through the first fan 221 and the second fan 222.

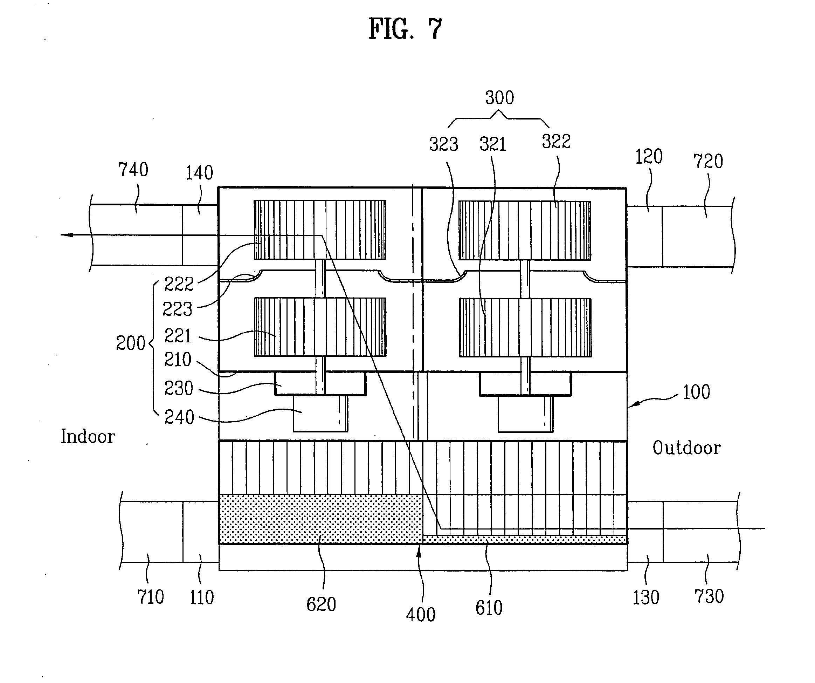

FIG. 7 illustrates a diagram showing an air flow on a side of the air supply fan unit when the ventilating system in FIG. 1 is operated in the air supply mode. In the air supply mode, fresh outdoor air is supplied to the room, and no room air is discharged to an outside of the room. In the air supply mode, the air supply fan unit 200 is driven, but the air discharge fan unit 300 is not driven. Then, a low pressure is formed between the air supply fan unit 200 and the second flow passage 420 of the preheat exchanger 400. According to this, the outdoor air is introduced into the case 100, and supplied to the room through the preheat exchanger 400 and the air supply fan unit 200. Since the steps of introduction of the outdoor air are the same with foregoing description, no more detailed description will be provided.

FIG. 8 illustrates a diagram showing an air flow on a side of the air discharge fan unit when the ventilating system in FIG. 1 is operated in the air discharge mode. In the air discharge mode, polluted room air is discharged to an outside of the room, and no outdoor air is supplied to the room. In the air discharge mode, the air discharge fan unit 300 is driven, but the air supply fan unit 200 is not driven. Then, a low pressure is formed between the air discharge fan unit 300 and the first flow passage 410 of the preheat exchanger 400. According to this, the room air is introduced into the case 100, and discharged to an outside of the room through the preheat exchanger 400, and the air discharge fan unit 300. Since the steps of discharge of the room air are the same with foregoing description, no more detailed description will be provided.

In the air discharge mode, since the room air is filtered by the first filter 610, almost no foreign matters are attached to the first flow passages 410 of the preheat exchanger 400. Therefore, drop of heat exchanger efficiency of the ventilating system can be minimized, even if the ventilating system is used for a long time. Such a ventilating mode can be used when it is required to discharge the room air quickly if the room air is polluted, extremely.

As has been described, the ventilating system of the present invention has the following advantages.

In the case of the ventilating system, the air supply fan unit and the air discharge fan unit are arranged side by side on the same side, and the preheat exchanger is arranged on an opposite side of the air supply fan unit and the air discharge fan unit. Accordingly, in comparison to a structure in which the air supply fan unit and the air discharge fan unit are arranged on opposite sides of the preheat exchanger, a size of the case can be made significantly smaller. In addition to this, if a case having a size the same with the related art ventilating system is used, a size of the preheat exchanger can be made larger, to improve energy efficiency, accordingly.

In the ventilating system of the present invention, both the air supply fan unit and the air discharge fan unit are arranged on the outlet side of the preheat exchanger. In addition to this, both the air supply fan unit and the air discharge fan unit are spaced a predetermined distance from the outlet side of the preheat exchanger. According to this, adequate low pressures can be formed between the air supply fan unit and the outlet side of the preheat exchanger, and between the air discharge fan unit and the outlet side of the preheat exchanger. According to this, an air flow performance is improved.

Moreover, filters are provided to the inlet side of the preheat exchanger for cleaning room air and outdoor air entering the preheat exchanger. The filters prevent attachment of foreign matters to the flow passages of the preheat exchanger, thereby preventing reduction of thermal efficiency of the preheat exchanger, effectively.

Furthermore, in the ventilating system of the present invention, a plurality of fans are provided to the air supply fan unit and the air discharge fan unit, respectively. The plurality of fans enable to raise discharge pressures of the outdoor air and the room air discharged through the air supply fan unit and the air discharge fan unit, respectively. Therefore, even if internal pressure resistances of the ducts connected to the ventilating system become high, reduction of flow rates of the outdoor air and the room air flowing through the ducts can be prevented, effectively.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A ventilating system comprising:
a case in communication with a room and an outside of the room;
an air supply fan unit secured to the case, the air supply fan unit having a plurality of fans for introducing outdoor air into the room;
an air discharge fan unit secured to the case, the air discharge fan unit having a plurality of fans for discharging room air to an outside of the room; and
a preheat exchanger in the case opposite to the air supply fan unit and the air discharge fan unit, for making the outdoor air and the room air to heat exchange with each other.

2. The ventilating system as claimed in claim 1, wherein the air supply fan unit and the air discharge fan unit each draws air in an axial direction and discharges the air in a radial direction.

3. The ventilating system as claimed in claim 1, wherein the plurality of fans of the air supply fan unit and the plurality of fans of the air discharge fan unit have the same number of fans.

4. The ventilating system as claimed in claim 1, further comprising a partition plate between the preheat exchanger, the air supply fan unit, and the air discharge fan unit, for preventing the room air and the outdoor air passed through the preheat exchanger from mixing with each other.

5. The ventilating system as claimed in claim 4, wherein the partition plate includes;
a middle plate between the air supply fan unit and the air discharge fan unit,
an upper plate extended from an upper portion of the middle plate to one side surface of the case and the preheat exchanger, for guiding air passed through the preheat exchanger to one of the air supply fan unit and the air discharge fan unit, and
a lower plate extended from a lower portion of the middle plate to the other side surface of the case and the preheat exchanger, for guiding air passed through the preheat exchanger to the other one of the air supply fan unit and the air discharge fan unit.

6. The ventilating system as claimed in claim 1, wherein the air supply fan unit includes;
a scroll casing in the case,
a first fan in the scroll casing for drawing and discharging the outdoor air passed through the preheat exchanger, and
a second fan in the scroll casing for drawing and discharging the outdoor air discharged from the first fan.

7. The ventilating system as claimed in claim 6, wherein both the first fan and the second fan have the same motor coupled thereto.

8. The ventilating system as claimed in claim 7, wherein the first fan and the second fan are connected to a rotation shaft of the motor in succession.

9. The ventilating system as claimed in claim 6, further comprising a flow guide between the first fan and the second fan in the scroll casing, for guiding the outdoor air from the first fan to a suction side of the second fan.

10. The ventilating system as claimed in claim 9, wherein the flow guide includes a sloped surface extended from an air discharge portion of the first fan to an air suction portion of the second fan.

11. The ventilating system as claimed in claim 9, wherein the flow guide has a curved surface extended from the air discharge portion of the first fan to an air suction portion of the second fan.

12. The ventilating system as claimed in claim 1, wherein the air discharge fan unit includes;
a scroll casing in the case,
a third fan in the scroll casing for drawing and discharging the room air passed through the preheat exchanger, and
a fourth fan in the scroll casing for drawing and discharging the room air discharged from the third fan.

13. The ventilating system as claimed in claim 12, wherein both the third fan and the fourth fan have the same motor coupled thereto.

14. The ventilating system as claimed in claim 13, wherein the third fan and the fourth fan are connected to a rotation shaft of the motor in succession.

15. The ventilating system as claimed in claim 12, further comprising a flow guide between the third fan and the fourth fan in the scroll casing, for guiding the room air from the third fan to a suction side of the fourth fan.

16. The ventilating system as claimed in claim 15, wherein the flow guide includes a sloped surface extended from an air discharge portion of the third fan to an air suction portion of the fourth fan.

17. The ventilating system as claimed in claim 15, wherein the flow guide has a curved surface extended from the air discharge portion of the third fan to an air suction portion of the fourth fan.

18. The ventilating system as claimed in claim 1, further comprising filters in the case between the preheat exchanger and the outside of the room for filtering the outdoor air.

19. A ventilating system comprising:
a case having a first inlet for drawing room air, a first outlet for discharging room air, a second inlet for drawing outdoor air, and a second outlet for discharging outdoor air;
an air supply fan unit having a scroll casing in the case, a first fan in the scroll casing for drawing and discharging the outdoor air, and a second fan in the scroll casing for drawing and discharging the outdoor air discharged from the first fan;
an air discharge fan unit having a scroll casing in the case, a third fan in the scroll casing for drawing and discharging the room air, and a fourth fan in the scroll casing for drawing and discharging the room air discharged from the third fan; and
a preheat exchanger in the case opposite to the air supply fan unit and the air discharge fan unit, for making the outdoor air and the room air to heat exchange with each other.

20. The ventilating system as claimed in claim 19, further comprising a flow guide between the first fan and the second fan in the scroll casing, for guiding the outdoor air from the first fan to a suction side of the second fan.

21. The ventilating system as claimed in claim 19, further comprising a flow guide between the third fan and the fourth fan in the scroll casing, for guiding the room air from the third fan to a suction side of the fourth fan.

22. A ventilating system comprising:
a case having a first inlet for drawing room air, a first outlet for discharging room air, a second inlet for drawing outdoor air, and a second outlet for discharging outdoor air;
an air supply fan unit having a scroll casing in the case, a first fan in the scroll casing for drawing and discharging the outdoor air, and a second fan in the scroll casing for drawing and discharging the outdoor air discharged from the first fan;
an air discharge fan unit having a scroll casing in the case, a third fan in the scroll casing for drawing and discharging the room air, and a fourth fan in the scroll casing for drawing and discharging the room air discharged from the third fan;
a preheat exchanger in the case opposite to the air supply fan unit and the air discharge fan unit, for making the outdoor air and the room air to heat exchange with each other; and
flow guides each provided between the first fan and the second fan, and between the third fan and the fourth fan.

23. A ventilating system comprising:
a case having a first inlet for drawing room air, a first outlet for discharging room air, a second inlet for drawing outdoor air, and a second outlet for discharging outdoor air;
a first inlet duct between the first inlet and the room;
a first outlet duct between the first outlet and the outside of the room;
a second inlet duct between the second inlet and the outside of the room;
a second outlet duct between the second outlet and the room;
an air supply fan unit having a scroll casing in the case, a first fan in the scroll casing for drawing and discharging the outdoor air, and a second fan in the scroll casing for drawing and discharging the outdoor air discharged from the first fan;
an air discharge fan unit having a scroll casing in the case, a third fan in the scroll casing for drawing and discharging the room air, and a fourth fan in the scroll casing for drawing and discharging the room air discharged from the third fan;
a preheat exchanger in the case opposite to the air supply fan unit and the air discharge fan unit, for making the outdoor air and the room air to heat exchange with each other; and
flow guides each provided between the first fan and the second fan, and between the third fan and the fourth fan.

24. The ventilating system as claimed in claim 23, wherein the first inlet duct, the first outlet duct, the second inlet duct, and the second outlet duct each has a rectangular section.
